# EUROPEAN PATENT APPLICATION

(11) **EP 4 509 193 A1**
(43) Date of publication of application: **19.02.2025**
(21) Application number: 23315314.7
(22) Date of filing: 14.08.2023
(51) Int. Cl.: A63F 13/216, H04L 67/131

(54) **A DEVICE, SYSTEM, AND METHOD FOR IMPLEMENTING A COMPUTING RESOURCE OPTIMIZATION ENGINE**

(71) Applicant: Amadeus S.A.S., 06410 Biot (FR)
(72) Inventor: BOUDIA, Mourad, 06410 Biot (FR); HAUVILLER, Nicolas, 06410 Biot (FR); TEXIER, Rodolphe, 06410 Biot (FR); BEN ROMDHANNE, Bilel, 06410 Biot (FR); DONMEZ, Fatih, 06410 Biot (FR)
(74) Representative: Samson & Partner Patentanwälte mbB

(57) **Abstract**

A device, system and method for implementing a computing resource optimization engine is provided. A computing device allocates in a memory, a virtual geographic whitespace within an electronic map of a metaverse publisher platform. The computing device receives, in the memory, an account profile associated with a client device accessing the electronic map in association with the virtual geographic whitespace. The computing device selects an interactive environment, of a plurality of interactive environments, based on the account profile. The computing device controls the metaverse publisher platform to generate the interactive environment within the virtual geographic whitespace for an avatar associated with the account profile while the avatar is associated with the virtual geographic whitespace.

## Description

### FIELD

The present specification relates generally to a computing resource optimization engine, and specifically to a device, system and method for implementing a computing resource optimization engine.

### BACKGROUND

Internet browsing began with the original hypertext markup language (HTML), which has iterated to its fifth version and continues to evolve. Elegant web browsing experiences are now commonplace, even on wireless mobile phones with small screens. With the correct equipment, augmented reality and virtual reality platforms are on the cusp of providing even richer experiences than offered by traditional browsing. At the same time, content for such platforms is increasing in volume and changing rapidly and, enormous unresolved challenges remain in optimizing such content. Indeed, many platforms may carry additional content intended to cause input from client devices that will divert traffic to another platform. However, the additional content may not trigger such input resulting in an overall wastage of computing resources by generating and transmitting additional content, which is ignored.

### SUMMARY

A first aspect of the present specification provides a method comprising: allocating, via a computing device, in a memory, a virtual geographic whitespace within an electronic map of a metaverse publisher platform; receiving, via the computing device, in the memory, an account profile associated with a client device accessing the electronic map in association with the virtual geographic whitespace; selecting, via the computing device, an interactive environment, of a plurality of interactive environments, based on the account profile; and controlling, via the computing device, the metaverse publisher platform to generate the interactive environment within the virtual geographic whitespace for an avatar associated with the account profile while the avatar is associated with the virtual geographic whitespace.

The method of the first aspect may further comprise: deleting the interactive environment from the virtual geographic whitespace when the avatar is no longer associated with the virtual geographic whitespace.

The method of the first aspect may further comprise: determining that the avatar is associated with the virtual geographic whitespace in response to the avatar being one or more of: proximal to the virtual geographic whitespace within the electronic map; and within a given virtual distance of the virtual geographic whitespace within the electronic map.

The method of the first aspect may further comprise: determining that the avatar is associated with the virtual geographic whitespace in response to the avatar approaching a link, within the electronic map, or another electronic map, the link to a location that is one or more of: proximal to the virtual geographic whitespace within the electronic map; and within a given virtual distance of the virtual geographic whitespace within the electronic map.

At the method of the first aspect, the plurality of interactive environments may be associated with a plurality of respective target platforms.

The method of the first aspect may further comprise: generating the interactive environment within the virtual geographic whitespace for at least one additional avatar associated with an additional account profile while the at least one additional avatar is associated with the virtual geographic whitespace.

The method of the first aspect may further comprise: transferring a data record associated with the interactive environment to the account profile while the avatar is accessing the interactive environment. At the method of the first aspect, the data record may comprise an electronic asset exchanged for an electronic currency.

The method of the first aspect may further comprise: controlling the metaverse publisher platform to regenerate the interactive environment within the virtual geographic whitespace for the avatar during a subsequent access of the metaverse publisher platform.

The method of the first aspect may further comprise: controlling a different metaverse publisher platform to generate another interactive environment within another virtual geographic whitespace for the avatar when an access of the different metaverse publisher platform occurs in association with the account profile.

The method of the first aspect may further comprise: selecting the interactive environment, of the plurality of interactive environments, further based on: communications between a plurality of target platforms and a mediator engine.

The method of the first aspect may further comprise: selecting the interactive environment, of the plurality of interactive environments, further based on: a region within the electronic map in which the virtual geographic whitespace is located.

A second aspect of the present specification provides a computing resource optimization engine comprising: a controller; and a computer-readable storage medium having stored thereon program instructions that, when executed by the controller, causes the controller to perform a set of operations comprising: allocating, in the memory, a virtual geographic whitespace within an electronic map of a metaverse publisher platform; receiving, in the memory, an account profile associated with a client device accessing the electronic map in association with the virtual geographic whitespace; selecting an interactive environment, of a plurality of interactive environments, based on the account profile; and controlling the metaverse publisher platform to generate the interactive environment within the virtual geographic whitespace for an avatar associated with the account profile while the avatar is associated with the virtual geographic whitespace.

At the computing resource optimization engine of the second aspect, the set of operations may further comprise: deleting the interactive environment from the virtual geographic whitespace when the avatar is no longer associated with the virtual geographic whitespace.

At the computing resource optimization engine of the second aspect, the set of operations may further comprise: determining that the avatar is associated with the virtual geographic whitespace in response to the avatar being one or more of: proximal to the virtual geographic whitespace within the electronic map; and within a given virtual distance of the virtual geographic whitespace within the electronic map.

At the computing resource optimization engine of the second aspect, the set of operations may further comprise: determining that the avatar is associated with the virtual geographic whitespace in response to the avatar approaching a link, within the electronic map, or another electronic map, the link to a location that is one or more of: proximal to the virtual geographic whitespace within the electronic map; and within a given virtual distance of the virtual geographic whitespace within the electronic map.

At the computing resource optimization engine of the second aspect, the plurality of interactive environments may be associated with a plurality of respective target platforms.

At the computing resource optimization engine of the second aspect, the set of operations may further comprise: generating the interactive environment within the virtual geographic whitespace for at least one additional avatar associated with an additional account profile while the at least one additional avatar is associated with the virtual geographic whitespace.

At the computing resource optimization engine of the second aspect, the set of operations may further comprise: transferring a data record associated with the interactive environment to the account profile while the avatar is accessing the interactive environment. At the computing resource optimization engine of the second aspect, the data record may comprise an electronic asset exchanged for an electronic currency.

At the computing resource optimization engine of the second aspect, the set of operations may further comprise controlling the metaverse publisher platform to regenerate the interactive environment within the virtual geographic whitespace for the avatar during a subsequent access of the metaverse publisher platform.

At the computing resource optimization engine of the second aspect, the set of operations may further comprise: controlling a different metaverse publisher platform to generate another interactive environment within another virtual geographic whitespace for the avatar when an access of the different metaverse publisher platform occurs in association with the account profile.

At the computing resource optimization engine of the second aspect, the set of operations may further comprise: selecting the interactive environment, of the plurality of interactive environments, further based on: communications between a plurality of target platforms and a mediator engine.

At the computing resource optimization engine of the second aspect, the set of operations may further comprise: selecting the interactive environment, of the plurality of interactive environments, further based on: a region within the electronic map in which the virtual geographic whitespace is located.

### BRIEF DESCRIPTIONS OF THE DRAWINGS

For a better understanding of the various examples described herein and to show more clearly how they may be carried into effect, reference will now be made, by way of example only, to the accompanying drawings in which:
FIG. 1 depicts a system for implementing a computing resource optimization engine, according to non-limiting examples.
FIG. 2 depicts a computing resource optimization engine, according to non-limiting examples.
FIG. 3 depicts a flowchart of a method for implementing a computing resource optimization engine, according to non-limiting examples.
FIG. 4 depicts an example electronic map that includes a virtual geographic whitespace, according to non-limiting examples.
FIG. 5 depicts the system of FIG. 1 implementing aspects of a method for implementing a computing resource optimization engine, according to non-limiting examples.
FIG. 6 depicts the computing resource optimization engine of FIG. 2 implementing further aspects of the method for implementing a computing resource optimization engine, according to non-limiting examples.
FIG. 7 depicts the system of FIG. 1 implementing yet further aspects of the method for implementing a computing resource optimization engine, according to non-limiting examples.
FIG. 8 depicts the system of FIG. 1 implementing yet further aspects of the method for implementing a computing resource optimization engine, according to non-limiting examples.
FIG. 9 depicts the computing resource optimization engine of FIG. 2 implementing yet further aspects of the method for implementing a computing resource optimization engine, according to non-limiting examples.
FIG. 10 depicts the system of FIG. 1 implementing yet further aspects of the method for implementing a computing resource optimization engine, according to non-limiting examples.
FIG. 11 depicts the electronic map of FIG. 4, with a location of an avatar outside of a threshold distance from the virtual geographic whitespace, according to non-limiting examples.
FIG. 12 depicts a portion of an environment represented by the electronic map of FIG. 11, and the location of the avatar in the environment, according to non-limiting examples.
FIG. 13 depicts an example of an updated electronic map, with a location of an avatar within a threshold distance from a virtual geographic whitespace, according to non-limiting examples.
FIG. 14 depicts the portion of the environment of FIG. 12 updated to include an interactive environment, according to non-limiting examples.

### DETAILED DESCRIPTION

Internet browsing is rapidly becoming more complex with the introduction of augmented reality and virtual reality platforms, and the like, which are interchangeably referred to hereafter as metaverse publisher platforms. A metaverse publisher platform may further be associated with an electronic map (e.g. which may be two-dimensional or three-dimensional) through which an avatar representing a client device may navigate an environment of a metaverse publisher platform. Certain regions of the electronic map may represent certain content at respective locations, and not all content may be compatible with all client devices. At a minimum, certain content may not trigger input from a given client device, resulting in an overall wastage of computing resources by generating and transmitting additional content which is ignored.

In addition, regions of an environment of a metaverse publisher platform may not initially be populated. For example, a region of an environment of a metaverse publisher platform may include whitespace (e.g. virtual geographic whitespace), which may be intended to be dynamic, however populating such whitespace may have particular technical challenges for a metaverse publisher platform. For example, mediating between many additional platforms that have content suitable for populating the whitespace may be challenging.

As such, provided herein is a device, system and method for implementing a computing resource optimization engine, which may optimize content for a metaverse publisher platform, for example according to an account profile associated with a client device accessing the metaverse publisher platform. In particular, the computing resource optimization engine may be generally configured to select an interactive environment, of a plurality of interactive environments, based on the account profile, and control a metaverse publisher platform to generate interactive environment within virtual geographic whitespace for an avatar associated with the account profile while the avatar is associated with the virtual geographic whitespace. The computing resource optimization engine may hence mitigate and/or reduce at least a portion of the aforementioned technical challenges.

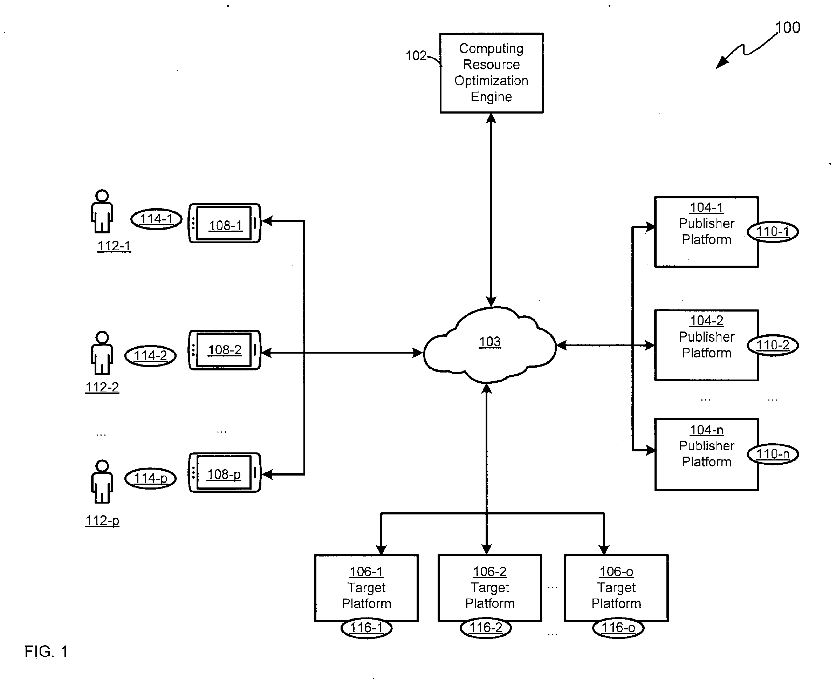

Fig. 1 shows a system 100 for implementing a computing resource optimization engine 102, interchangeably referred to hereafter, for simplicity, as the engine 102.

The system 100 will hence be described with respect to engines, such as the engine 102. As used herein, the term "engine" refers to hardware (e.g., a processor, such as a central processing unit (CPU), graphics processing unit (GPU), an integrated circuit or other circuitry) or a combination of hardware and software (e.g., programming such as machine- or processor-executable instructions, commands, or code such as firmware, a device driver, programming, object code, etc. as stored on hardware). Hardware includes a hardware element with no software elements such as an application specific integrated circuit (ASIC), a Field Programmable Gate Array (FPGA), a PAL (programmable array logic), a PLA (programmable logic array), a PLD (programmable logic device), etc. A combination of hardware and software includes software hosted at hardware (e.g., a software module that is stored at a processor-readable memory such as random access memory (RAM), a hard-disk or solid-state drive, resistive memory, or optical media such as a digital versatile disc (DVD), and/or implemented or interpreted by a processor), or hardware and software hosted at hardware.

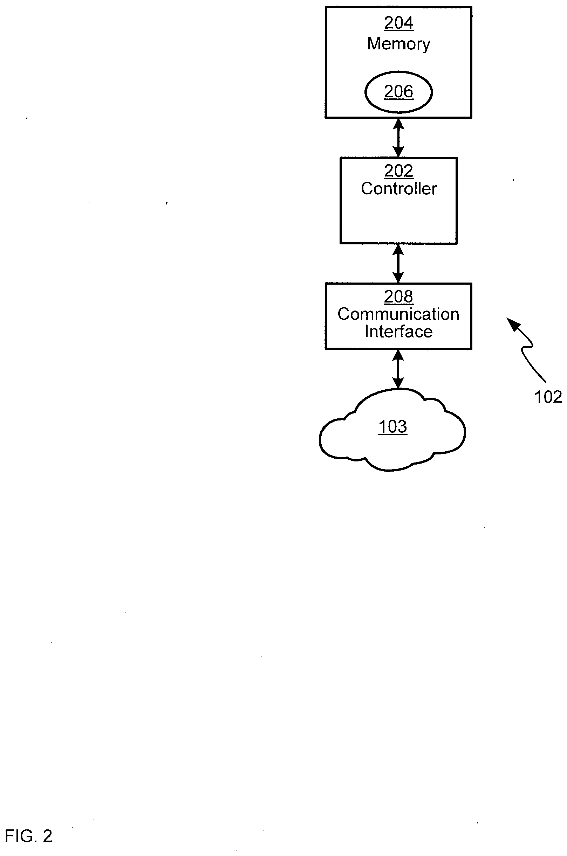

However, a particular example of the engine 102 is described below with reference to FIG. 2.

The components of the system 100 are generally in communication via communication links which are depicted in FIG. 1, and throughout the present specification, , as double-ended arrows between respective components. The communication links include any suitable combination of wireless and/or wired communication networks and, similarly, the communication links may include any suitable combination of wireless and/or wired links.

In particular, as depicted, the components of the system 100 may be in communication with each other via a network 103, such as the Internet, and/or any other suitable combination of wired and/or wireless networks.

In particular, the system 100 comprises a plurality of publisher platforms 104-1, 104-2 ... 104-n. Collectively, the publishing platforms 104-1, 104-2 ... 104-n are referred to as a publisher platforms 104, and generically, as a publisher platform 104. This nomenclature is used elsewhere herein. An "n" number of the publisher platforms 104 may comprise as few as one publisher platform 104, and as many as tens, to hundreds to thousands of publisher platforms 104.

The system 100 further comprises a plurality of target platforms 106-1, 106-2...106-o (e.g. target platforms 106 and/or a target platform 106). An "o" number of the publisher platforms 104 may comprise as few as one target platform 106, and as many as tens, to hundreds to thousands of target platforms 106. As will be presently explained, the target platforms 106 may each have content used to populate regions of environments provided by the publishing platforms 104.

The system 100 further comprises a plurality of client devices 108-1, 108-2...108-p (e.g. client devices 108 and/or a client device 108). A "p" number of the client devices 108 may comprise as few as one client device 108, and as many as tens, to hundreds to thousands of client devices 108.

In general, the engine 102, the publishing platforms 104, the target platforms 106 and the client devices 108 may be in communication via the network 103.

The publishing platforms 104 may be based on any present or future electronic media servers that publish and/or provide content for the client devices 108. In particular, the publishing platforms 104 may comprise augmented reality and/or virtual reality platforms (and/or mixed reality platforms) which may provide augmented reality and/or virtual reality environments, such as "metaverse" environments. Respective geography of an environment of particular publishing platform 104 may be defined by a respective electronic map 110-1, 110-2...110-n (e.g. electronic maps 110 and/or an electronic map 110).

The client devices 108 may be any type of human-machine interface for interacting with the publishing platforms 104. For example, the client devices 108 may include traditional laptop computers, desktop computers, mobile phones, tablet computers and any other device that may be used to receive content via one or more of the publishing platforms 104 that complement the input and output hardware devices associated with a given client device 108. It is contemplated that the client devices 108 may include virtual or augmented reality gear complementary to metaverse environments (e.g. virtual reality and/or augmented reality environments) that may be offered by the publisher platforms 104. For example, the client devices 108 may comprises one or more of: a virtual reality headset; a virtual reality station comprising a headset with head, hand and feet tracking technology; a virtual reality headset with haptic feedback hand controllers; a virtual reality station comprising a headset with hand, feet, and torso tracking and haptic feedback technology; a traditional laptop and/or desktop computer; a traditional mobile telephone and/or tablet, and the like. These are non-limiting examples, but their diversity of input components and output components is illustrative of the diverse human-machine interface aspects of the client devices 108 of the present specification.

The client devices 108 may be operated by respective users 112-1, 112-2 ...112-p (e.g. the users 112 and/or a user 112) that are associated with a respective account profile 114-1, 114-2 ...114-p (e.g. the account profiles 114 and/or an account profile 114) that uniquely identifies a respective user 112 accessing a given client device 108 in the system 100, and/or indicates certain properties associated with a respective user 112. In particular, the client devices 108 may be operated by a respective user 112 to access an environment provided by a publishing platform 104.It is further understood that a user 112 may be associated with a plurality of account profiles 114, for example for each publisher platform 104 and/or for each target platform 106.

While as depicted an account profile 114 may be stored at a client device 108 operated by a respective user 112, an account profile 114 may be stored anywhere in the system 100 that is accessible to the engine 102, and/or any other suitable components of the system 100. For example, an account profile 114 may be stored at a database, a central repository of account profiles, not depicted, and the like. As such, it is understood that a given account profile 114 is associated with a respective user 112, and not specifically a client device 108, so that a respective user 112 may operate any suitable client device 108, for example to log into and access an environment of a publisher platform 104 (e.g. via browser of a client device 108, and/or an application of a client device 108, and the like). It is further understood that the publisher platforms 104 and/or the engine 102 and/or a target platform 106 (and/or any other suitable component of the system 100), may have access to the account profile 114 independent of the client device 108 used by the respective user 112. Nonetheless, a client device 108 and an account profile 114 may be referred to herein as being associated with each other, and/or at least temporarily associated with each other, at least by virtue of each of such a client device 108 and an account profile 114 being associated with a respective user 112.

Returning to the publisher platforms 104, the publisher platforms 104 may be based on any suitable metaverse environment, and the like, which may generate primary content, and may embed secondary content into the metaverse environment, which may be available from target platforms 106 and which may be intended to divert a given client device 108 from a publisher platform 104 towards a specific target platform 106 that is associated with the secondary content. Hence, it is understood that target platforms 106 may be "targets" of diversions of client devices 108 to a publisher platform 104, and the system 100 may be generally configured to maximize such diversions.

Primary content may also be provided by the publisher platforms 104 that offer web pages, social media, audio, video, movies, television, games, books, news, search results, and the like, for example in a metaverse format. However, the primary content and/or the secondary content may comprise any suitable primary content, and may include, but is not limited to, content that provides certain goods (e.g. real world goods and/or virtual goods) and/or certain services (e.g. real world services and/or virtual services), for example for sale or for free. The nature of the publisher platforms 104 and/or the target platforms 106 is thus not particularly limited. Hence, very generally, the publisher platforms 104 carry primary content for consumption by the client devices 108, and the publisher platforms 104 may also carry secondary content for diverting traffic to the target platforms 106, the secondary content provided by the target platforms 106, as described herein.

In a particular example, a publisher platform 104 may provide content according to a metaverse environment, and virtual geographic locations and/or regions of such a metaverse environment may be defined by a respective electronic map 110. For example, the electronic map 110 may indicate different virtual geographic regions where different primary and secondary content may be accessed and/or viewed electronically, for example via a client device 108. For example, the electronic map 110 may indicate different virtual geographic where web pages, social media, audio, video, movies, television, games, books, news, search results, virtual goods, virtual services, amongst other possibilities, may be accessed electronically via a client device 108. It is understood that access by a client device 108 to a metaverse environment defined by an electronic map 110 may occur by way of an avatar, and the like which may be controlled by a respective user 112, via the client device 108, to navigate the metaverse environment defined by the electronic map 110; the client device 108 may also be used to view and/or interact with primary and/or secondary content of metaverse environment defined by the electronic map 110. Indeed, interaction with secondary content, which may be provided by a target platform 106, may divert traffic, from the publisher platform 104 providing the environment, to the target platform 106. The term avatar, as used herein, may refer to any two-dimensional and/or three-dimensional representation of a user 112 in an metaverse environment defined by an electronic map 110, and which may be controlled via a client device 108 to interact with primary content and secondary content of an environment provided by a publisher platform 104.

Furthermore, an electronic map 110 may be two-dimensional or three-dimensional, which may depend on whether a respective metaverse environment provided by respective publisher platform 104 is any two-dimensional or three-dimensional.

As such, certain regions of an electronic map 110 may indicate where primary content (e.g. provided by a respective publisher platform 104) may be accessed (e.g. via an avatar), while other regions of an electronic map 110 may indicate where secondary content (e.g. provided by a respective target platform 106) may be accessed (e.g. via client device 108 and/or via an avatar).

As will be described herein, a portion of an electronic map 110 may be allocated (e.g. by the engine 102) as a virtual geographic whitespace where content may be customized to provide a particular interactive environment of a plurality of interactive environments. An electronic map 110 may include one, or more than one, virtual geographic whitespace, and different electronic maps 110 may have different regions for virtual geographic whitespaces.

For example, as depicted, the target platforms 106 are associated with respective interactive environments 116-1, 116-2...116-o (e.g. interactive environments 116 and/or an interactive environment 116). As will be described herein, an interactive environment 116 may be provided at a virtual geographic whitespace of an electronic map 110, for example based on an account profile 114 associated with a client device 108 accessing the electronic map 110.

In particular, an environment of a metaverse publisher platform 104 may be provided and/or rendered at a client device 108 in two dimensions or three dimensions, which may depend on the capabilities of a client device 108, however an environment of a metaverse publisher platform 104 may generally be generated in three dimensions, and converted into two dimensional representations and/or rendered in two dimensional representations for client devices 108 which are capable of rendering the metaverse publisher platform in two dimensions, and not three dimensions.

As such, an interactive environment 116 may comprise a two-dimensional and/or three-dimensional environment having a similar and/or same footprint as a virtual geographic whitespace at which the interactive environment 116 is provided at an electronic map 110, and/or a footprint of the interactive environment 116 may be adapted according to a footprint of a virtual geographic whitespace at which the interactive environment 116 is provided at the electronic map 110.

In a particular example, an interactive environment 116 may comprise two-dimensional and/or three-dimensional virtual structures, and the like, and may have any suitable size and/or shape compatible with an electronic map 110 and/or a metaverse environment represented by an electronic map 110.

Regardless of a shape, and the like, an interactive environment 116 may provide the aforementioned secondary content, such as goods and/or services for free and/or for sale, and/or any other suitable content.

However, it may be challenging to adapt a publisher platform 104 to communicate with many target platforms 106 to determine which particular interactive environment 116 to provide in a virtual geographic whitespace of an electronic map 110. As such, as will be described herein, the engine 102 is generally configured to determine which interactive environment 116, of the plurality of interactive environments 116, to provide in a virtual geographic whitespace of an electronic map 110 based, for example, on an account profile 114 associated with a client device 108 (e.g. such an association by way of a user 112 associated with the account profile 114 and the client device 108) accessing the electronic map 110, for example using a respective avatar.

As such, it is understood that the engine 102 may intermediate between the publisher platforms 104 and the target platforms 106, to control the publisher platforms 104 to provide interactive environments 116 from the target platforms 106, to customize the environments provided by the publisher platforms 104. Such intermediation obviates the publisher platforms 104 and the target platforms 106 from negotiating amongst themselves, which, for tens to hundreds to thousands of publisher platforms 104 and/or target platforms 106, may become challenging.

According to a specific illustrative example, the present specification may have particular application to the travel industry and thus may (but need not) be biased towards primary content of interest to the users 112 who are travelers, while secondary content may be more likely to include travel content including that are intended to direct traffic to a target platform 106 that may be operated by travel entities and sell travel services. Travel entities may broadly encompass different categories of all types of travel service offerings including transportation-entities; accommodation-entities and travel-destination entities. Transportation-entities may provide transportation services for the users 112, such as airlines, rental car agencies, rail services, ferries, and bus lines. Accommodation-entities may provide lodging for the users 112, such as hotels, vacation rentals, resorts and B&Bs ("Bed and Breakfasts"), including the lodging at the location where a user 112 arrives after receiving a transportation service. Travel-destination entities may include providers of activities at the location where a user 112 is lodging. Travel-destination entities may thus include, by way of non-limiting examples, restaurants, spas, concert venues, exhibition centers, summits, sporting event venues, fairs, conference venues, sporting arenas, museums, art galleries, tours and resort activity centers and the like.

Hence, according to the specific illustrative example, the target platforms 106 may focus on content of interest to travelers. In certain examples, the target platforms 106 may reference transportation-entities and their sales workflows. However, the target platforms 106 may also include travel-destination target platforms 106. Furthermore, the target platforms 106 may also be associated with a travel entity which has connectivity to partners, thereby enabling the sale of a variety and/or bundle of goods and/or services, for example a transportation-actor which is able to sell its own flights together with services from accommodation-entities and travel-destination entities. Regardless, the target platforms 106 may include an e-commerce environment including a sales workflow or interactive sales function for the client devices 108, representing a customer experience sales funnel, including experiences such as travel itinerary prediction and fulfillment as well as service searching, service browsing, adding a service to shopping cart, checkout, fare lock and temporary inventory holds to be provided for a fee, and payment processing.

Returning to the client devices 108, the client devices 108 may be based on any suitable client computing platform operated by the users 112 that may have an interest in the primary content being provided on the platforms 104 and/or the secondary content being offered by the target platforms 106.

Hence, a user 112, and an associated client device 108, may thus be associated with a respective account profile 114 as has previously been described.

A form of an account profile 114 is not particularly limited, and in a simple example, may be simply an alpha-numerical sequence that is unique in relation to other account profiles 114 (and/or other identifiers) of the system 100. An account profile 114 may also be more complex as they may be combinations of account credentials (e.g. user name, password, two-factor authentication token, etc.) that uniquely identify a given user 112. Account profiles 114 themselves may also be indexes that point to identifier objects, such as accounts associated with respective users 112. In particular, account profiles 114 may generally be uniquely identifiable within the system 100 in association with what they represent.

However, an account profile 114, and/or an account to which an account profile 114 is linked, may further define preferences and/or a history of a respective user 112, which may indicate previous interactions of the respective user 112 with metaverse environments, and the like, and which may include, but is not limited to, a browsing history of the respective user 112, for example across different metaverse environments and/or different browsers and/or different client devices 108, and the like. In some examples, an account profile 114 may further define relationships between a respective user 112 and one or more entities associated with the target platforms 106, such as loyalty numbers, and the like, issued to the respective user 112 from one or more entities associated with the target platforms 106.

The users 112 may typically be individuals but may alternatively, and/or in addition, be corporate entities and such users 112 may interact, via respective client devices 108, with both the publisher platforms 104 as well as the target platforms 106. Each account profile 114 may be used by other components of the system 100, including the publisher platforms 104, the target platforms 106 and the engine 102 to track, amongst other possibilities: traffic flows between a given client device 108 and various publisher platforms 104, including, but not limited to, interactions with primary and/or secondary content; traffic flows between a given client device 108 and target platforms 106, including, but not limited to, selections and/or purchases made via the target platforms 106; diversions of traffic originated by a given client device 108 from a given publisher platform 104 to respective target platforms 106; and (returning to the aforementioned travel-industry example) travel-itinerary fulfillments arising from selection of secondary content provided via the publisher platforms 104; and the like.

Having described an overview of system 100, hardware infrastructure of certain components of the system 100 will next be described. In particular, FIG. 2 depicts a schematic diagram of a non-limiting example of internal components of the engine 102.

Attention is next directed to FIG. 2 which depicts details of the engine 102. The engine 102 may comprise one or more computing devices, and/or one or more servers and/or one or more cloud computing devices, and the like. Alternatively, and/or in addition, the engine 102 may comprise one or more personal computers and/or one or more laptops, and/or any other suitable computing device.

In the depicted example of FIG. 2, the engine 102 includes at least one controller 202 interconnected with a memory 204, storing an application 206, and a communication interface 208.

The controller 202 may be implemented as a plurality of processors or one or more multi-core processors and/or may include one or more central processing units (CPUs). The controller 202 be configured to execute different programing instructions, as described herein.

The memory 204 may include any suitable combination of non-volatile and volatile memories. A non-volatile memory, of the memory 204, may be based on any persistent memory technology, such as an Erasable Electronic Programmable Read Only Memory ("EEPROM"), flash memory, solid-state hard disk (SSD), other type of hard-disk, or combinations of them. Hence, a non-volatile memory, of the memory 204, may also be described as a non-transitory computer readable media.

A volatile memory, of the memory 204, may be based on any random access memory (RAM) technology. For example, volatile memory, of the memory 204, may be based on a Double Data Rate (DDR) Synchronous Dynamic Random-Access Memory (SDRAM).

Other types of non-volatile and/or volatile memory are contemplated and/or may be provided.

The controller 202 and the memory 204 may be generally comprised of one or more integrated circuits (ICs).

The controller 202 is also interconnected with the communication interface 208, which enables the engine 102 to communicate with the other components of the system 100, for example (as depicted) via the network 103. The communication interface 208 therefore may include any suitable components (e.g. network interface controllers (NICs), radio units, and the like) to communicate via any suitable network. The specific components of the communication interface 208 may be selected based upon the nature of the network 103 used to communicate, and/or local communication between components of the system 100, and the like.

While not depicted in FIG. 2, the engine 102 may also include input and output devices connected to the controller 202, such as keyboards, mice, display screens, and the like (not shown).

The components of the engine 102 mentioned above may be deployed in a single enclosure, or in a distributed format. In some examples, therefore, the engine 102 may include a plurality of controllers and/or processors, either sharing the memory 204 and the communication interface 208, or having distinct associated memories and communication interfaces. As such, it is understood that the memory 204 and/or a portion of the memory 204 may be internal (e.g. as depicted) or external to the engine 102; regardless, the controller 202 is understood to have access to the memory 204.

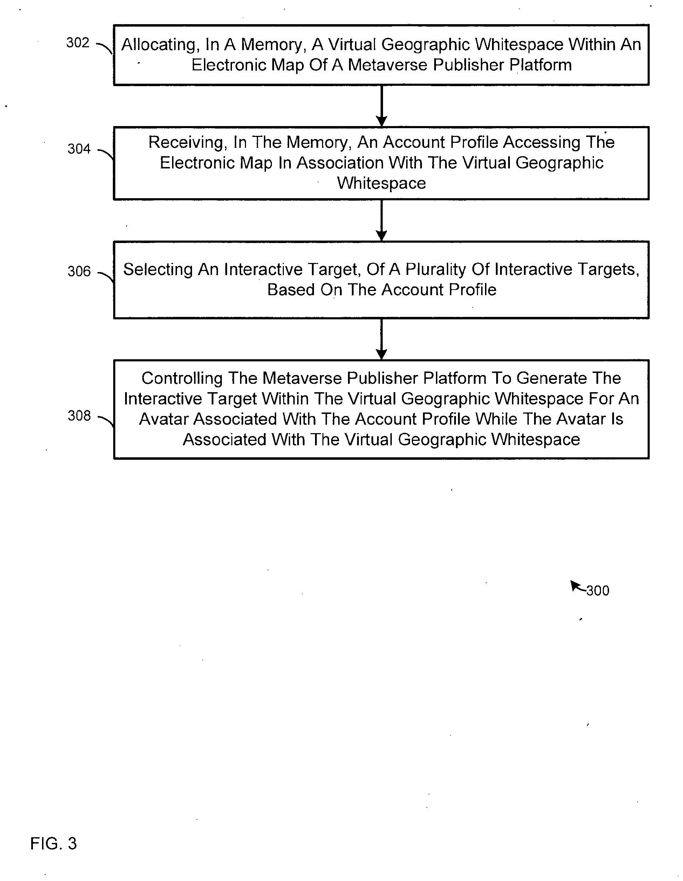

The memory 204 also stores computer-readable programming instructions, executable by the controller 202, in the form of various applications, including the application 206. As will be understood by those skilled in the art, the controller 202 executes the instructions of the application 206 (and any other suitable applications) in order to perform various actions defined by the instructions contained therein including, but not limited to, the blocks of a method described with respect to FIG. 3. In the description below, the controller 202, and more generally the engine 102, are understood to be configured to perform those actions. It will be understood that they are so configured via the execution (by the controller 202) of the instructions of the applications stored in memory 204.

The infrastructure of the engine 102, or a variant thereon, can be used to implement any of the computing components of the system 100, including, but not limited to, the platforms 104, 106. Furthermore, the engine 102 and the platforms 104, 106 may also be implemented as virtual machines and/or with mirror images to provide load balancing. Functions of the engine 102 may also be distributed amongst different platforms 104, 106, thereby obviating the need for a central engine 102. Similarly, a plurality of engines 102 may be provided.

Furthermore, it is understood that the core components of the controller 202, the memory 204, and the communication interface 208, as described in relation to the engine 102, have analogues in the different form factors of client machines such as those that can be used to implement the client devices 108. The client devices 108 may be based on computer workstations, laptop computers, tablet computers, mobile telephony devices or the like, and may include any suitable augmented reality and/or virtual reality human-machine interfaces (HMIs) and/or hardware interfaces including, but not limited to, any suitable combination of input devices and output devices (e.g. such as keyboards, pointing devices, touch devices, display screens, haptic devices, and the like).

Attention is now directed to FIG. 3 which depicts a flowchart representative of a method 300 for implementing a computing resource optimization engine, such as the engine 102. The operations of the method 300 of FIG. 3 correspond to machine readable instructions that are executed by the engine 102, and specifically the controller 202. In the illustrated example, the instructions represented by the blocks of FIG. 3 are stored at the memory 204 for example, as the application 206. The method 300 of FIG. 3 is one way in which the controller 202 and/or the engine 102 and/or the system 100 may be configured. Furthermore, the following discussion of the method 300 of FIG. 3 will lead to a further understanding of the system 100, and its various components.

Put another way, the computing resource optimization engine 102 may comprise the controller 202 and the memory 204 storing instructions executable on the controller 202, to cause the controller 202 to implement the blocks of the method 300.

The method 300 of FIG. 3 need not be performed in the exact sequence as shown, or with certain blocks omitted, performed in parallel or in a different order than shown. Accordingly, the elements of method 300 are referred to herein as "blocks" rather than "steps." The method 300 of FIG. 3 may be implemented on variations of the system 100, as well.

Furthermore, it is understood that aspects of the method 300 will be described with reference to a publisher platform 104 and an associated electronic map 110, which may respectively comprise any of the publisher platforms 104 and an associated electronic map 110. Similarly, aspects of the method 300 will be described with reference to a target platform 106 and an associated interactive environment 116, which may respectively comprise any of the target platforms 106 and an associated interactive environment 116. Similarly, aspects of the method 300 will be described with reference to a user 112 and an associated client device 108 and an associated account profile 114, which may respectively comprise any of the users 112 and an associated client device 108 and account profile 114.

It is furthermore understood that aspects of the method 300 will be described with respect to certain distances, directions, and the like, in an environment provided by a publisher platform 104, and represented by an electronic map 110. It is understood that such distances, directions, and the like are virtual distances, virtual directions, and the like, commensurate with a virtual geography of an environment represented by an electronic map 110. Hence, for example, a reference to a distance in meters, and the like, is understood to be a reference to virtual meters within a virtual geography of an environment represented by an electronic map 110. However, such distances may be provided in any suitable unit of measurement compatible with an environment represented by an electronic map 110.

At a block 302, the controller 202 and/or the engine 102, allocates, in the memory 204, a virtual geographic whitespace within an electronic map 110 of a metaverse publisher platform 104.

For example, the controller 202 and/or the engine 102 may receive, in the memory 204, the electronic map 110 from the metaverse publisher platform 104, and may determine that a portion of the electronic map 110 indicates a given region is dedicated to whitespace. For example, the controller 202 and/or the engine 102 may process the electronic map 110 to determine a region labelled as "white space", and the like, at the electronic map 110; such a region may be determined to be a virtual geographic whitespace within an electronic map 110. The controller 202 and/or the engine 102 may hence, allocate, in the memory 204, a virtual geographic whitespace within the electronic map 110 for this region of the electronic map 110. Such allocation of the memory 204 may be to later load an interactive environment 116, and/or an indication thereof, into the electronic map 110.

The electronic map 110 may be provided and/or transmitted from the metaverse publisher platform 104, to the controller 202 and/or the engine 102, in response to a log-in to an environment provided by the metaverse publisher platform 104, for example via a client device 108.

Alternatively, and/or in addition, the electronic map 110 may be provided and/or transmitted from the metaverse publisher platform 104, to the controller 202 and/or the engine 102, in response to an avatar associated with a client device 108 (e.g. a user 112 thereof, the client device 108 used to access the environment of the electronic map 110) approaching the virtual geographic whitespace of the electronic map 110.

For example, an avatar approaching the virtual geographic whitespace of the electronic map 110 may be determined by the metaverse publisher platform 104 and/or the controller 202 and/or the engine 102 on the basis of a vector of the avatar, within the environment represented by the electronic map 110 pointing towards the virtual geographic whitespace and a speed represented by the vector indicating that the avatar will be within a threshold distance (e.g. such as 5 meters, 10 meters, 20 meters, amongst other possibilities) of the virtual geographic whitespace within a given time period (e.g. such as 10 seconds, 20 seconds, 30 seconds, amongst other possibilities).

Alternatively, and/or in addition, the electronic map 110 may be provided and/or transmitted from the metaverse publisher platform 104, to the controller 202 and/or the engine 102, in response to an avatar associated with a client device 108 (e.g. a user 112 thereof) being within a threshold distance (e.g. such as 5 meters, 10 meters, 20 meters, amongst other possibilities) of the virtual geographic whitespace of the electronic map 110.

Alternatively, and/or in addition, the electronic map 110 may be cached at the memory 204, and the allocation of the block 302 may occur when the electronic map 110 is cached.

Alternatively, and/or in addition, the electronic map 110 may be cached at the memory 204 and the controller 202 and/or the engine 102 may receive, from the publisher platform 104 (e.g. and/or or the client device 108 accessing the environment represented by the electronic map 110), coordinates of the avatar, and the controller 202 and/or the engine 102 may determine a location and/or vector of the avatar accordingly, as well as whether the location and/or the vector meets the aforementioned threshold distance(s) and (when applicable) threshold times.

Alternatively, and/or in addition, the block 302 may be initiated by way of a message, and/or any other given indicator, from the metaverse publisher platform 104, that the client device 108 is accessing the environment represented by the electronic map 110. Such a message may include the electronic map 110.

At a block 304, the.controller 202 and/or the engine 102, receives, in the memory 204, an account profile 114 associated with the client device 108 accessing the electronic map 110 (e.g. an environment thereof) in association with the virtual geographic whitespace.

For example, the controller 202 and/or the engine 102 may receive the account profile 114 from the publisher platform 104, and/or the controller 202 and/or the engine 102 may receive the account profile 114 from the client device 108, and/or the controller 202 and/or the engine 102 may retrieve the account profile 114 from a database storing the account profile 114. Such a receipt of the account profile 114 may occur via the aforementioned message, and/or any other given indicator, from the metaverse publisher platform 104, that the client device 108 is accessing the environment represented by the electronic map 110. Alternatively, and/or in addition, retrieval of the account profile 114 from a database may occur upon receipt of an identifier identifying the account profile 114 and/or a storage location of the account profile 114 via such a message, and the like.

At a block 306, the controller 202 and/or the engine 102, selects an interactive environment 116, of a plurality of interactive environments 116, based on the account profile 114.

As has been previously described, the plurality of interactive environments 116 may be associated with a plurality of respective target platforms 106, and an interactive environment 116 may be selected based on certain characteristics of the target platforms 106.

For example, the account profile 114 may indicate certain preferences and/or characteristics of the user 112 and/or the aforementioned history of the user 112, and such characteristics and/or history may be compared to characteristics of the target platforms 106. For example, the controller 202 and/or the engine 102 may communicate with the target platforms 106 to determine certain characteristics of the target platforms 106, and determine that one target platform 106, of the plurality of target platforms 106, is similar to, and/or the same as, certain characteristics of the preferences and/or history of the user 112. Alternatively, and/or in addition, such characteristics of the target platforms 106 may be stored, and/or prepopulated, at the memory 204.

Regardless of how the controller 202 and/or the engine 102 has access to the characteristics of the target .platforms 106, the controller 202 and/or the engine 102 may select an interactive environment 116 of the target platform 106, of the plurality of target platforms 106, that has characteristics that are similar to, and/or the same as, the certain characteristics of the user 112 indicated by the account profile 114. Such a comparison and/or selection may occur in any suitable manner, including, but not limited to, using any suitable one or more machine learning algorithms (e.g. and/or artificial intelligence algorithms, and the like).

In a particular example, the account profile 114 may indicate that the user 112 has purchased certain goods and/or services from one target platform 106, of the plurality of target platforms 106, more than other target platforms 106, and an interactive environment 116 of such a target platform 106 may be selected at the block 306.

In another example, the account profile 114 may indicate that the user 112 has a loyalty number for one target platform 106, of the plurality of target platforms 106, but not other target platforms 106, and an interactive environment 116 of such a target platform 106 may be selected at the block 306.

It is further understood that information identifying the selected interactive environment 116 may be used to populate the virtual geographic whitespace of the electronic map 110 using the allocated memory of the block 302. For example, an identifier of the selected interactive environment 116 may comprise text "POPUP BRAND!" which may be stored at the allocated memory, and inserted into the electronic map 110 in the virtual geographic whitespace of the electronic map 110, which generate an updated electronic map 110.

At a block 308, the controller 202 and/or the engine 102, controls the metaverse publisher platform 104 to generate the interactive environment 116 within the virtual geographic whitespace for an avatar associated with the account profile 114 while the avatar is associated with the virtual geographic whitespace. Furthermore, the block 308 may include the controller 202 and/or the engine 102 provide the updated electronic map 110 to the metaverse publisher platform 104, such that, when the updated electronic map 110 is used by the user 112 and/or the client device 108 operated by the user 112, the updated electronic map 110 indicates the selected interactive environment 116 at the virtual geographic whitespace.

For example, the controller 202 and/or the engine 102 may provide, to the metaverse publisher platform 104, an identifier of the interactive environment 116 selected at the block 306 (e.g. such as a network address of the interactive environment 116, and the like), and the metaverse publisher platform 104 may retrieve the interactive environment 116 accordingly from the target platform 106 associated with the interactive environment 116, and the like.

Alternatively, and/or in addition, the controller 202 and/or the engine 102 may instruct the target platform 106 associated with the interactive environment 116, and the like, to provide the interactive environment 116, selected at the block 306 to the metaverse publisher platform 104.

Alternatively, and/or in addition, the controller 202 and/or the engine 102 may retrieve the target platform 106 associated with the interactive environment 116, and the like, and provide the interactive environment 116 selected at the block 306 to the metaverse publisher platform 104.

It is further understood, at the block 308, that controlling the metaverse publisher platform 104 to generate the interactive environment 116 includes an exchange of an identifier (e.g. from the account profile 114) associated with the avatar with at least the controller 202 and/or the engine 102, and the metaverse publisher platform 104 such that metaverse publisher platform 104 may provide the interactive environment 116 at the virtual geographic whitespace for the avatar associated with the account profile 114 while the avatar is associated with the virtual geographic whitespace.

In particular, the controller 202 and/or the engine 102 may determine that the avatar is associated with the virtual geographic whitespace in response to the avatar being one or more of: proximal to the virtual geographic whitespace within the electronic map 110; within a given virtual distance of the virtual geographic whitespace within the electronic map 110; and the like. Hence, for example, the controller 202 and/or the engine 102 may determine that the avatar is associated with the virtual geographic whitespace when the avatar is a threshold distance (e.g. such as 5 meters, 10 meters, 20 meters, amongst other possibilities) of the virtual geographic whitespace of the electronic map 110.

In other examples, the controller 202 and/or the engine 102 may determine that the avatar is associated with the virtual geographic whitespace in response to the avatar approaching a link, within the electronic map 110, or another electronic map 110, the link to a location that is one or more of: proximal to the virtual geographic whitespace within the electronic map 110; within a given virtual distance of the virtual geographic whitespace within the electronic map 110; and the like. For example, such a link may comprise a "portal" and the like from a location of the link to a location proximal to the virtual geographic whitespace and/or within a given virtual distance of the virtual geographic whitespace. Such a link may be a component of the electronic map 110 and/or such a link may be component of another electronic map 110 that connects the two electronic maps 110, such that an avatar may travel between the two electronic maps 110 via the link.

Furthermore, the controller 202 and/or the engine 102 may determine that the avatar is approaching the link using a vector of the avatar (e.g. and a threshold distance and a threshold time as previously described). In some examples, the two electronic maps 110 may be associated with the same publisher platform 104, and in other examples, the two electronic maps 110 may be associated with different publisher platforms 104. In the former example, it is understood one publisher platform 104 may implement different metaverse environments represented by respective electronic maps 110 that are linked to each other. In the latter example, is understood two publisher platforms 106 may be associated, and implement different metaverse environments represented by respective electronic maps 110 that are linked to each other.

Furthermore, the controller 202 and/or the engine 102 may determine that the avatar is approaching the link using coordinates of the avatar received from a publishing platform 104, and/or the controller 202 and/or the engine 102 may determine that the avatar is approaching the link using any suitable process.

Once the interactive environment 116 is generated within the virtual geographic whitespace for the avatar, the avatar may interact with the interactive environment 116 in any suitable manner. In particular, as the interactive environment 116 has been specifically selected for the avatar, and/or as the virtual geographic whitespace has been specifically customized for the avatar, the interactive environment 116 may have a higher likelihood of triggering additional input from the client device 108, for example to select content provided by the interactive environment 116, which may result a given client device 108 being diverted from the publisher platform 104 towards the target platform 106 associated with the interactive environment 116. The given client device 108 may then be used to interact with an e-commerce environment and/or sales workflows, and the like, of the target platform 106 associated with the interactive environment 116.

Furthermore, the avatar may interact with the interactive environment 116 by entering the interactive environment 116, and the like, and select and/or interact with content provided within the interactive environment 116, which may result in a given client device 108 being diverted from the publisher platform 104 towards the target platform 106 associated with the interactive environment 116

The method 300 may include other aspects.

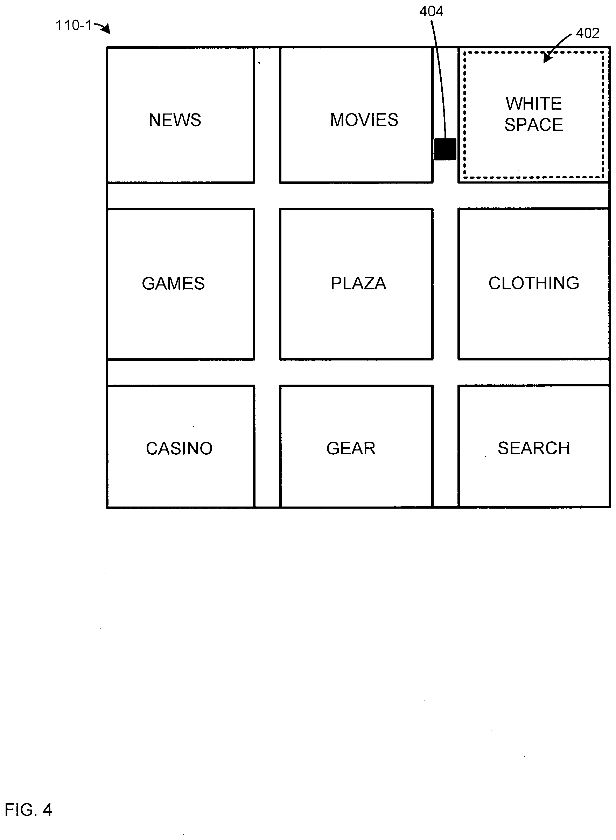

For example, the block 306 may include the controller 202 and/or the engine 102 selecting the interactive environment 116, of the plurality of interactive environments 116, based on the account profile 114 and a "neighborhood" of the environment represented by the electronic map 110. For example, the environment represented by the electronic map 110 may include various regions that may be dedicated to certain respective types of content, such as "MOVIES" or "CLOTHING" (e.g. see FIG. 4, FIG. 11 and FIG. 13). In particular, the virtual geographic whitespace may be located in a region dedicated to a certain type of content. In these examples, the interactive environment 116 selected at the block 306 may be based on certain preferences and/or characteristics of the user 112 and/or the aforementioned history of the user 112 indicated by the account profile 114 and which also correspond to a respective of type of content in the region in which the virtual geographic whitespace is located. Put another way, the method 300 may further comprise the controller 202 and/or the engine 102, selecting an interactive environment 116, of a plurality of interactive environments 116, based on the account profile 114 and a region of the electronic map 110 within which the virtual geographic whitespace is located.

In further examples, the controller 202 and/or the engine 102 may control the metaverse publisher platform 104 to generate the interactive environment 116 within the virtual geographic whitespace for the avatar associated with the account profile 114 while the avatar is associated with the virtual geographic whitespace, and in some examples the interactive environment 116 may be generated only for the avatar, but not other avatars. Rather, other interactive environments 116 may be generated based on account profiles 114 of other avatars associated with the virtual geographic whitespace.

Put another way, in some examples, one avatar (e.g. an associated client device 108) may be provided with the interactive environment 116 within the virtual geographic whitespace associated with an account profile 114 of the avatar, while other avatars (e.g. associated with respective client devices 108) may be provided with respective interactive environments 116 within the virtual geographic whitespace associated with respective account profile 114 of the avatars.

Put yet another way, different avatars may be provided with different interactive environments 116 within the virtual geographic whitespace based on respective account profiles 114. In particular, the interactive environments 116 provided to each avatar may be different from one another, and may be provided simultaneously to different avatars. In some of these examples, the different avatars may also "see" each other, for example, until different interactive environments 116 are entered by the avatars; however, within the different interactive environments 116, the avatars may not "see" each other as interiors of the different interactive environments 116 may be different enough that one interactive environment 116 may have features at locations where avatars may not go (e.g. as walls, counters, and the like), while a second interactive environment 116 may have features at corresponding locations where avatars may go; hence, to prevent avatars from "seeing" other avatars pass through walls, counters, and/or other features, the avatars may be hidden from each other while in the different interactive environments 116 simultaneously provided at a same virtual geographic whitespace.

It is furthermore understood that, in examples where different avatars may be provided with different interactive environments 116 within the virtual geographic whitespace based on respective account profiles 114, different updated electronic maps 110 may be generated, with the controller 202 and/or the engine 102 allocating memory (e.g. at the block 302), for each of the virtual geographic whitespaces of the different updated electronic maps 110. Furthermore, the different updated electronic maps 110 may be associated with respective account profiles 114, and provided to the publisher platform 104, such that respective client devices 108 may access the different updated electronic maps 110 for navigation through the environment provided by the publisher platform 104. In particular, each of the different updated electronic maps 110 may have a respective labels at the virtual geographic whitespaces that identify respective interactive environments 116 thereof (e.g. selected at the block 306).

However, in other examples, the controller 202 and/or the engine 102 may generate the interactive environment 116 within the virtual geographic whitespace for the avatar and at least one additional avatar associated with an additional account profile 114 while the at least one additional avatar is associated with the virtual geographic whitespace. In these examples, the avatars may not be hidden from each other within the interactive environment 116.

Furthermore, the additional account profile 114 and the target platform 106 of the interactive environment 116 may have similar characteristics, similar to the account profile 114 and the target platform 106 as described above.

Furthermore, in this example, a common updated electronic map 110 may be generated in association with the respective account profiles 114.

Hence, in some examples, all avatars associated with account profiles 114 that have characteristics similar to characteristics the target platform 106 of the interactive environment 116 may be provided with a common interactive environment 116. Put another way, the controller 202 and/or the engine 102 may control the metaverse publisher platform 104 to generate the interactive environment 116 within the virtual geographic whitespace for all avatars associated with account profiles 114 that have similar characteristics to the target platform 106 of the interactive environment 116, while the avatars are associated with the virtual geographic whitespace.

As has been previously described, the avatar may interact with and interactive environment 116 which may result in an electronic asset, such as a good and/or service (e.g. such as plane ticket) being purchased at the interactive environment 116.

In these examples, the controller 202 and/or the engine 102 may transfer a data record associated with the interactive environment 116 to the account profile 114 while the avatar is accessing the interactive environment 116. For example, such a data record may comprise an electronic asset exchanged for an electronic currency (e.g. via an e-commerce environment and/or sales workflow associated with the target platform 106 that provides the interactive environment 116). Put another way; a user 112, via a client device 108 may navigate an avatar relative to the interactive environment 116, to purchase an electronic asset using any suitable electronic currency, and the electronic asset may be transferred to the account profile 114.

In some examples, the controller 202 and/or the engine 102 may delete the interactive environment 116 from the virtual geographic whitespace when the avatar is no longer associated with the virtual geographic whitespace. Put another way, when the avatar is navigated away from the virtual geographic whitespace (e.g. as determined by the avatar being at a location that is greater than the aforementioned threshold distance), the interactive environment 116 may be deleted from the virtual geographic whitespace to save processing resources at least at the publisher platform 104. Alternatively, and/or in addition, the controller 202 and/or the engine 102 may delete the interactive environment 116 from the virtual geographic whitespace when the avatar is no longer associated with the virtual geographic whitespace based on the client device 108 being used to log out of the publisher platform 104. It is understood, in these examples, that the controller 202 and/or the engine 102 may again updated the electronic map 110 to remove any label that identified the interactive environment 116 (e.g. and provide such an updated electronic map 110 to the publisher platform 104), and free up any of the memory 204 allocated at the block 302.

In some examples, the controller 202 and/or the engine 102 may update the account profile 114 to indicate which interactive environment 116 was generated at the block 308, and/or the controller 202 and/or the engine 102 may store such an indication at a database, and the like. Regardless, it is understood that the controller 202 and/or the engine 102 may have access to an indication of the interactive environment 116 generated at the block 308 in association with the account profile 114. As such, the controller 202 and/or the engine 102 may regenerate the interactive environment 116 within the virtual geographic whitespace for the avatar during a subsequent access of the metaverse publisher platform 104. For example, a next time that an access of the metaverse publisher platform 104 occurs in association with the account profile 114, the controller 202 and/or the engine 102 may process the account profile 114, and the like, to determine that the interactive environment 116 that had been previously generated and generate the same interactive environment 116.

However, in other examples, the method 300 may be repeated from at least the block 308 each time an access of the metaverse publisher platform 104 occurs in association with the account profile 114, and/or each time an avatar is associated with a virtual geographic whitespace, and the like. For example, between accesses, the account profile 114 may change, resulting in a different interactive environment 116 being selected at the block 308 in subsequent accesses. Put another way, upon a subsequent access to the metaverse publisher platform 104 (e.g. the subsequent access associated with the account profile 114), the controller 202 and/or the engine 102 may control the metaverse publisher platform 104 to generate another interactive environment 116 within the virtual geographic whitespace for the avatar associated with the account profile 114 while the avatar is associated with the virtual geographic whitespace, for example based at least on updates to the account profile 114 since a last associated access.

It is further understood that the user 112 may interact with more than one publisher platform 104, for example using a same or different client device 108, but using the same account profile 114. In these examples, the controller 202 and/or the engine 102 may control a different metaverse publisher platform 104 (e.g. different from the metaverse publisher platform 104 described with respect to the block 302) to generate another interactive environment 116 within another virtual geographic whitespace for the avatar (which may the same or different as the avatar for the metaverse publisher platform 104 described with respect to the block 302) when an access of the different metaverse publisher platform 104 occurs in association with the account profile 114.

Put another way, the method 300 may be repeated for accesses of different metaverse publisher platforms 104, and an interactive environment 116 selected at the block 306 may be different for different metaverse publisher platforms 104. For example, the account profile 114 may indicate that traffic from a client device 108 associated with the account profile 114 may be diverted to different target platforms 106 depending on which metaverse publisher platform 104 is being accessed.

Put another way, a history of the account profile 114 may indicate that when a user 112 is accessing a first metaverse publisher platform 104, the user 112 is most likely interact with a first target platform 106, but when the user 112 is accessing a second publisher platform 104 (different from the first publisher platform 104) the user 112 is most likely interact with a second target platform 106 (different from the first target platform 106).

As such, at the block 306, a selection of an interactive environment 116 may occur accordingly.

In yet further examples, the controller 202 and/or the engine 102 may select the interactive environment 116, of the plurality of interactive environments 116, further based on: communications between a plurality of target platforms, and a mediator engine. In some examples, the engine 102 may comprise such a mediator engine, though functionality of such a mediator engine may be provided at another component of the system 100, such as one or more of the publishing platforms 104, and the like. In yet further examples, such a mediator engine may be a separate component of the system 100. Regardless, it is understood that such a mediator engine is represented at least by the engine 102.

For example, at the block 306 a plurality of interactive environments 116 may initially be selected based on the account profile 114 (e.g. more than one target platforms 106 may have associated characteristics similar to characteristics of the account profile 114), and the mediator engine may contact a respective plurality of the target platforms 106, which may then "bid" on providing their respective interactive environments 116 at the virtual geographic whitespace. In some of these examples, the target platform 106 with the highest bid may have their respective interactive environments 116 selected for generation at the virtual geographic whitespace, though any suitable criteria may be used to select a bid. Such a bid may be in the form an electronic currency, though such a bid may be in any other suitable form.

Hence, it is understood that while interactive environments 116 may be originate from the target platforms 106, and the publisher platforms 104 may provide the interactive environments 116 (e.g. in associated metaverse environments provided by the publisher platforms 104) to users 112 and/or client devices 108, and/or associated avatars, the engine 102 (and/or a mediator engine) may intermediate between the publisher platforms 104 and the target platforms 106 to determine which interactive environments 116 are to be provided.

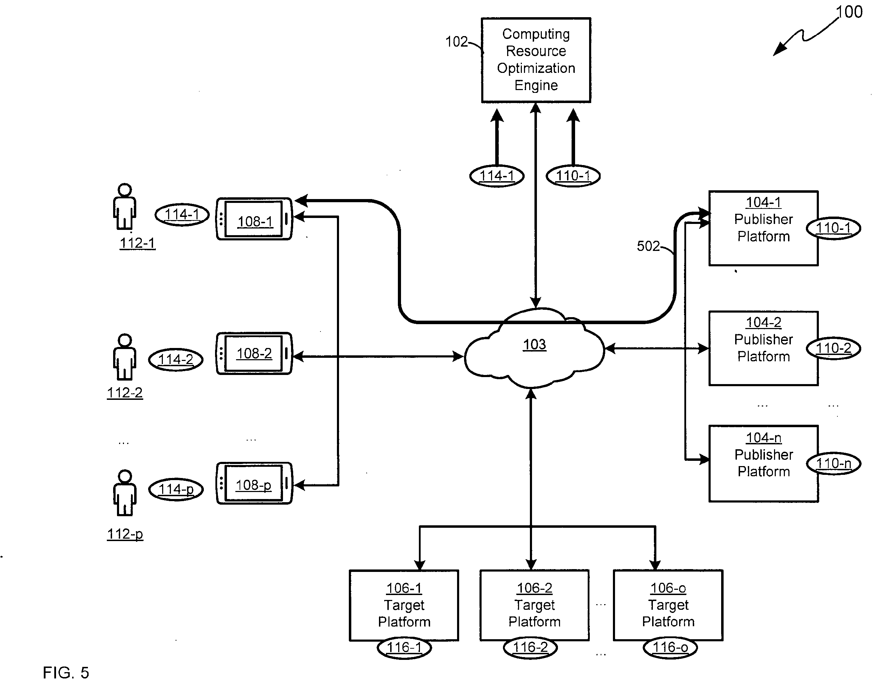

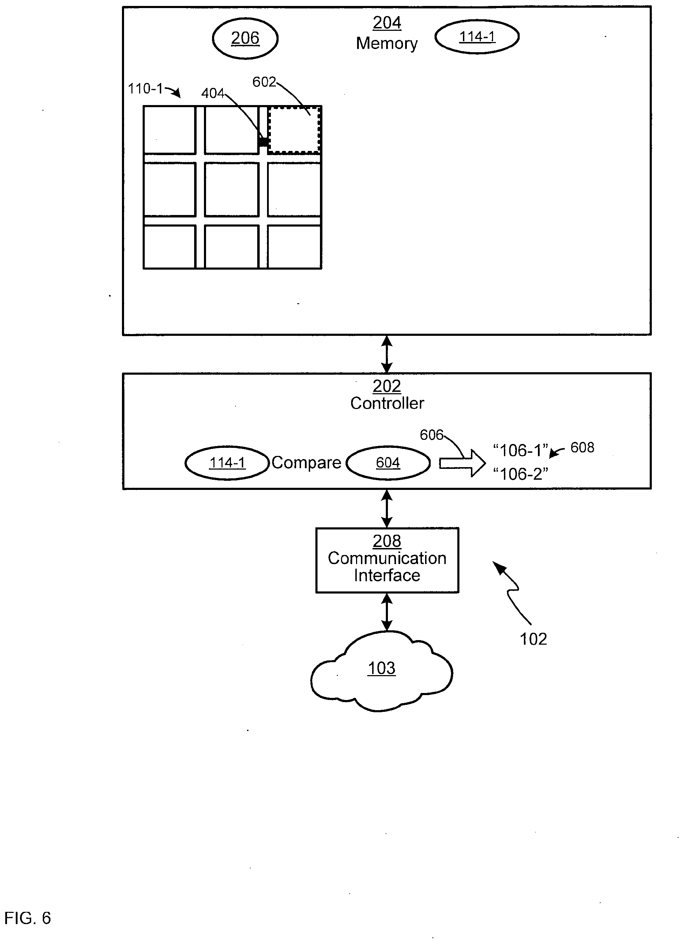

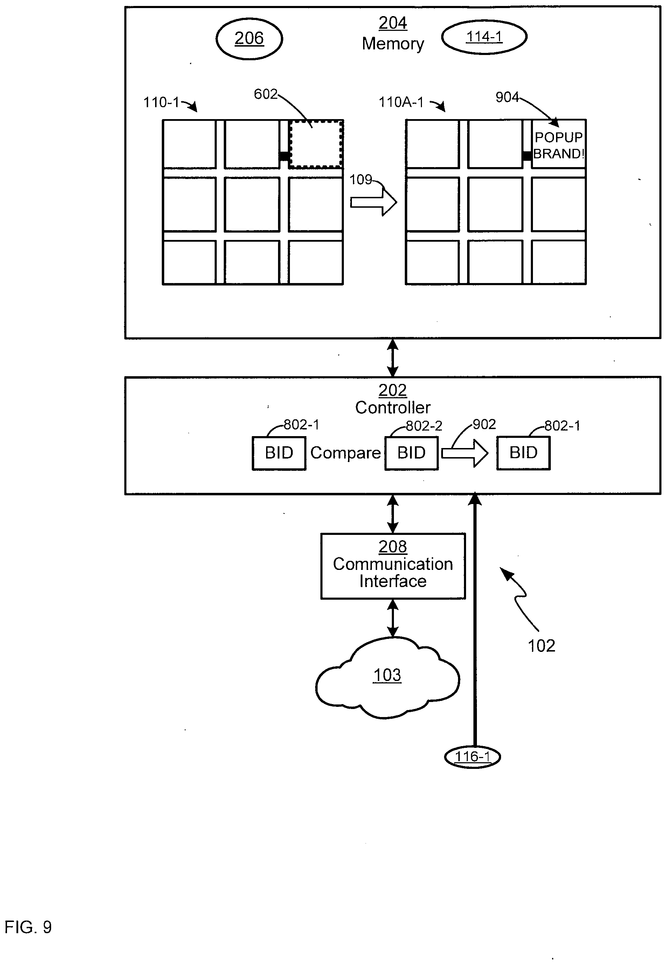

Attention is next directed to FIG. 4, FIG. 5, FIG. 6, FIG. 7, FIG. 8, FIG. 9, FIG. 10, FIG. 11, FIG. 12, FIG. 13 and FIG. 14, which depicts an example of aspects of the method 300. FIG. 5, FIG. 7, FIG. 8 and FIG. 10 are substantially similar to FIG. 1, with like components having like numbers. FIG. 6 and FIG. 9 are substantially similar to FIG. 2, with like components having like numbers.

Attention is first directed to FIG. 4 which depicts an example electronic map 110, and in particular an electronic map 110-1 associated with the publisher platform 104-1. As depicted, the electronic map 110-1 identifies different regions of an environment provided by the publisher platform 104-1, where different services may be accessed and/or goods may be purchased, for example using labels "NEWS", "MOVIES", "GAMES", "SEARCH", "CASINO", "GEAR" and "CLOTHING", though such regions are understood to be examples only. Furthermore, such regions may represent primary content of the publisher platform 104-1.

Also depicted at the electronic map 110-1 is a virtual geographic whitespace 402 (e.g. labelled "WHITE SPACE"), which identifies a region at which an interactive environment 116 may be provided at the environment provided by the publisher platform 104-1. The virtual geographic whitespace 402 is depicted in dashed lines to indicate that the virtual geographic whitespace 402 may be customized as described herein. While the virtual geographic whitespace 402 is depicted as being separate from the other regions, it is understood that the virtual geographic whitespace 402 may be located in any of the other regions of the electronic map 110-1 and/or the region, at which the interactive environment 116 may be provided, may be a component and/or a subregion of another region. For example, the region of the virtual geographic whitespace 402 as depicted in FIG. 4 may be a component of the depicted "CLOTHING" region.

For completeness, also depicted at the electronic map 110-1 is a location of a link 404 which may be used as a portal to, and/or from, another environment provided by the publisher platform 104-1, or another publisher platform 104.

Attention is next directed to FIG. 5, which depicts the client device 108-1 logging in and/or accessing the publisher platform 104-1, for example to access the environment provided by the publisher platform 104-1. The log-in and/or access is represented by a communication link 502 between the publisher platform 104-1 and the client device 108-1. While not depicted, it is understood that the log-in and/or access may occur in conjunction with the access profile 114-1 being shared with the publisher platform 104-1 and/or being made available to the publisher platform 104-1.

As also depicted in FIG. 5, in conjunction with the log-in and/or access, the access profile 114-1 and the electronic map 110-1 may be received (e.g. at the block 304 of the method 300, which, in this example, is understood to occur prior to the block 302 of the method 300) at the engine 102, for example from the publisher platform 104-1, and/or in any other suitable manner.

Attention is next directed to FIG. 6, which depicts the electronic map 110-1 and the access profile 114-1 stored at the memory 204 of the engine 102. While the labels of the electronic map 110-1 are not depicted for simplicity, they are nonetheless understood to be present.

As depicted, the controller 202 and/or the engine 102 is understood to have allocated (e.g. at the block 302 of the method 300), a portion 602 of the memory 204 to the virtual geographic whitespace 402 of the electronic map 110-1. As depicted, the portion 602 of the memory 204 is understood to correspond to the region of the virtual geographic whitespace 402 at the electronic map 110-1.

Also depicted in FIG. 6, the controller 202 and/or the engine 102 compares the access profile 114-1 with respective characteristics 604 of one or more of the plurality of target platforms 106 and determines (e.g. as represented by an arrow 606) that the target platforms 106-1, 106-2 have respective characteristics 604 that are similar to, and/or the same as, respective characteristics of the access profile 114-1. In FIG. 6, results 608 of the comparison are represented by identifiers "106-1" and "106-2".

In such examples, the engine 102 may be configured to select the target platforms 106, and/or at most a given number of the target platforms 106, whose characteristics have a best match with characteristics associated with the account profile 114 using any suitable threshold based technique. For example, characteristics of the access profile 114-1 may be compared to each of the respective characteristics 604 of the plurality of target platforms 106 and matches may be assigned a respective score (e.g. between 0 and 100, with 0 indicating no match, and 100 indicating a perfect match); the respective scores may be compared to a threshold score (e.g. 70, 80, 90, amongst other possibilities) and a given number of the highest scoring target platforms 106, with scores greater than the threshold score may be selected.

While not depicted, the respective characteristics 604 may be requested from the target platforms 106, and/or retrieved from a database, and the like.

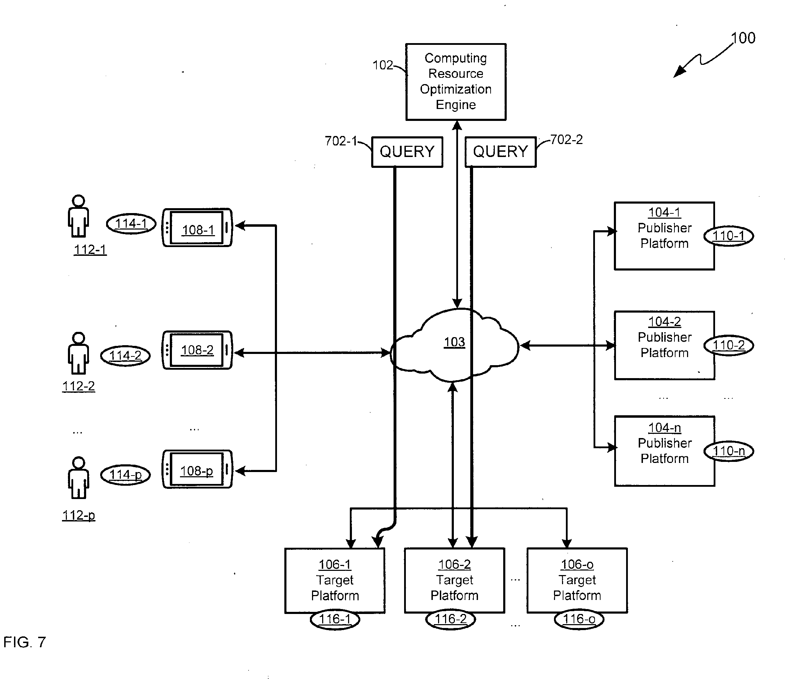

Attention is next directed to FIG. 7, which depicts the controller 202 and/or the engine 102 sending respective queries 702-1, 702-2 (e.g. queries 702 and/or a query 702) to the target platforms 106-1, 106-2, for example in response to the results 608 of the comparison described with reference to FIG. 6.

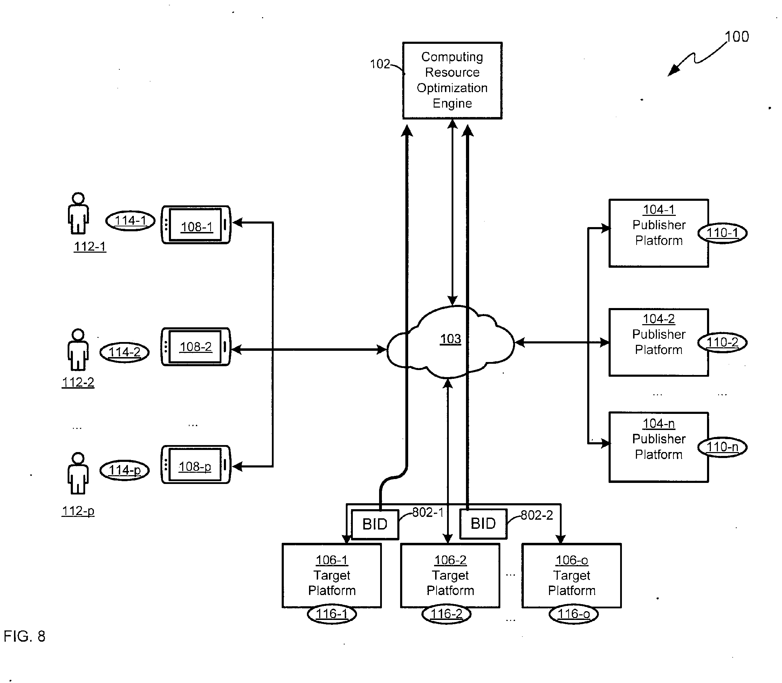

With reference to FIG. 8, the queries 702 generally query for respective bids 802-1, 802-2 (e.g. bids 802 and/or a bid 802) from the target platforms 106-1, 106-2 for providing their respective interactive environments 116-1, 116-2 at a region of the environment provided by the publisher platform 104-1 that corresponds to the virtual geographic whitespace 402. While not depicted, the target platforms 106-1, 106-2 may be provide with a portion of information associated with the access profile 114-1 to assist at determining the bids 802. For example, the queries 702 may include a portion of a history of purchases by the user 112, which may provide the target platforms 106-1, 106-2 of a likelihood of the user 112 operating the client device 108-1 to make a purchase via their respective interactive environments 116-1, 116-2. For example, the history of purchases by the user 112 may indicate a likelihood of the user 112 making a respective purchase from the target platforms 106-1, 106-2.

In some examples, rather than query only the target platforms 106-1, 106-2 for bids, all of the target platforms 106 may be queried for bids, and/or more than only the target platforms 106 of the results 608 may be queried for bids. For example, one or more of the target platforms 106 may subscribe to receive queries whenever an interactive environment 116 is to be selected, such that the one or more subscribed target platforms 106 may provide a bid, regardless of whether or not a target platform 10 has respective characteristics that are similar to, and/or the same as, respective characteristics of an account profile 114.

With attention directed to FIG. 9, the controller 202 and/or the engine 102 compares the bids 802, and selects (e.g. as indicated by an arrow 902) the bid 802-1 using any suitable criteria. For example, the bid 802-1 may be the highest bid from the bids 802.

As such, as also depicted in FIG. 9, the controller 202 and/or the engine 102 may select (e.g. at the block 306 of the method 300) the interactive environment 116-1 on the basis of at least the account profile 114-1, and, in this example, on the basis of the bid 802-1 being selected.

Indeed, a bidding process of FIG. 7, FIG. 8 and FIG. 9 may depict functionality of the aforementioned mediator engine, the functionality of which, as depicted, is implemented in FIG. 7, FIG. 8 and FIG. 9 by the engine 102.

As such, in this specific example, the controller 202 and/or the engine 102 retrieves the interactive environment 116-1, for example from the target platform 106-1 having the highest bid 802-1, and populates an identifier 904 of the interactive environment 116-1 at the electronic map 110-1 at the virtual geographic whitespace 402, using the allocated portion 602 of the memory 204. In doing so, as depicted, the controller 202 and/or the engine 102 may generate an updated electronic map 110A-1 that includes the identifier 904 at the virtual geographic whitespace 402. As depicted, the identifier 904 comprises text "POPUP BRAND!". In examples, the term "BRAND" may comprise a brand name, and the like associated with the target platform 106-1.

In other examples, the controller 202 and/or the engine 102 may not retrieve the interactive environment 116-1, but rather may retrieve the identifier 904 to populate the virtual geographic whitespace 402.

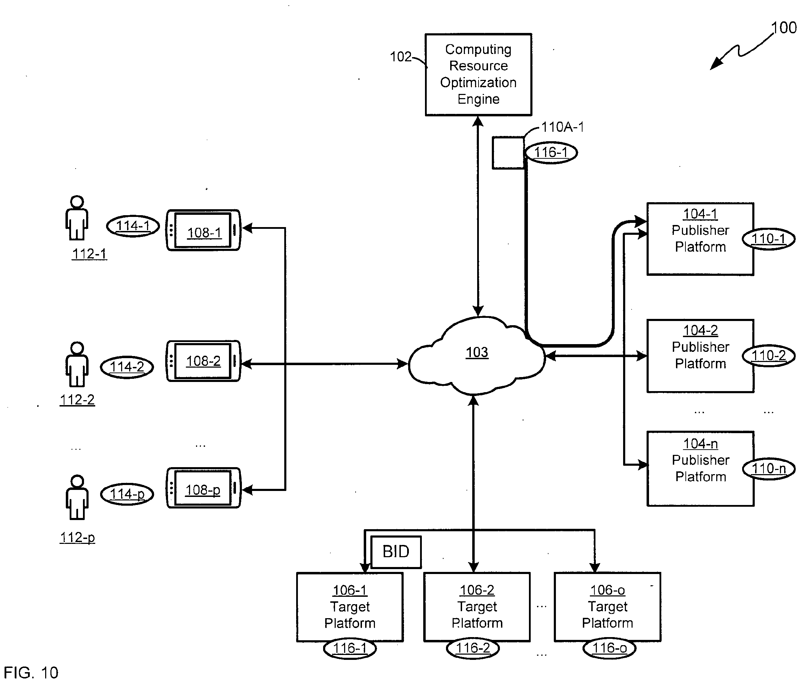

Attention is next directed to FIG. 10, which depicts the engine 102 (e.g. and/or the controller 202) at least partially controlling (e.g. at the block 308 of the method 300) the publisher platform 104-1 to generate the interactive environment 116-1 within the virtual geographic whitespace 402 (e.g., or more specifically withing a region of the environment provided by the publisher platform 104-1 that corresponds to the virtual geographic whitespace 402) for an avatar associated with the account profile 114-1 while the avatar is associated with the virtual geographic whitespace 402.

For example, as depicted, the engine 102 provides, to the publisher platform 104-1, the updated map 110A-1 and the interactive environment 116-1. In some examples, the engine 102 may not provide the interactive environment 116-1, but rather may provide information that may be used by the publisher platform 104-1 to retrieve the interactive environment 116-1, such as a network address of the interactive environment 116-1. In these examples, such an identifier may be retrieved by the engine 102 from the target platform 106-1, and/or a database, and the like.

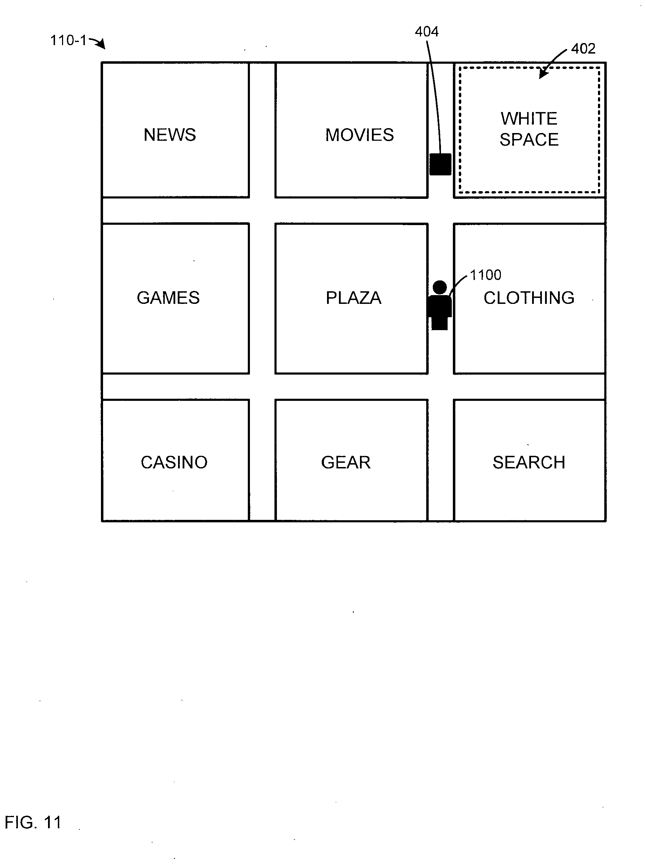

Attention is next directed to FIG. 11 which depicts the electronic map 110-1 and a location of an avatar 1100 of the user 112-1 relative to the virtual geographic whitespace 402. In this example, it is assumed that the avatar 1100 is not yet associated with the virtual geographic whitespace 402 and hence, the avatar 1100 is understood to be navigating the environment provided by the publishing platform 104-1 using the electronic map 110-1 (e.g. which may be which may be provided to, and/or accessed by, the client device 108-1), and not the updated electronic map 110A-1. For example, the avatar 1100 may be outside of a threshold distance from the virtual geographic whitespace 402.

It is further understood that the avatar 1100 may still be able to "see" a region corresponding to the virtual geographic whitespace 402 in the environment provided by the publishing platform 104-1, but such a region may not yet be populated.

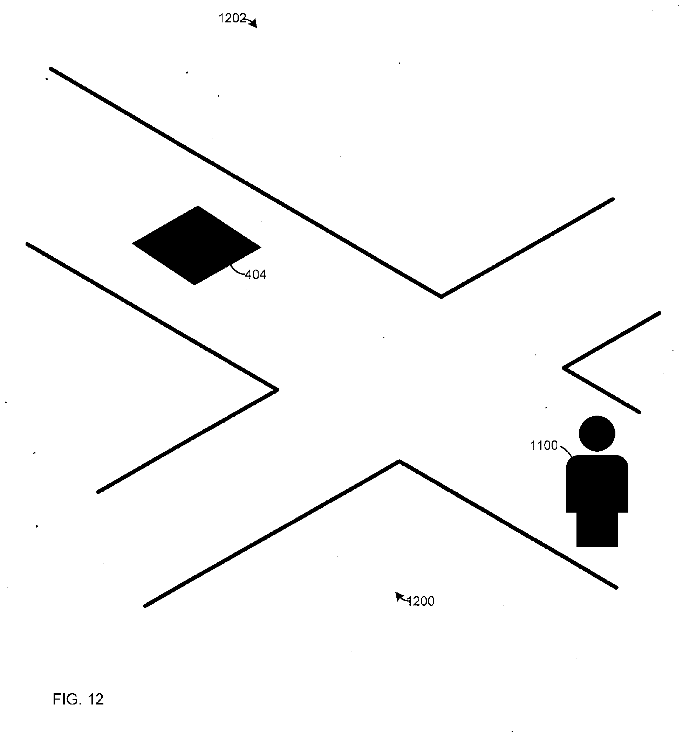

For example, attention is next directed to FIG. 12 which depicts a portion of the environment 1200 provided by the publishing platform 104-1 with the avatar 1100 at the same position depicted on the electronic map 110-1 of FIG. 11. As depicted, a region 1202 corresponds to the virtual geographic whitespace 402. As the avatar 1100 is not yet associated with the virtual geographic whitespace 402, no interactive environment 116 is provided at the region 1202.

However, for example at a later time, the avatar 1100 may be associated with the virtual geographic whitespace 402. For example, the avatar 1100 may move to within a threshold distance from the virtual geographic whitespace 402.

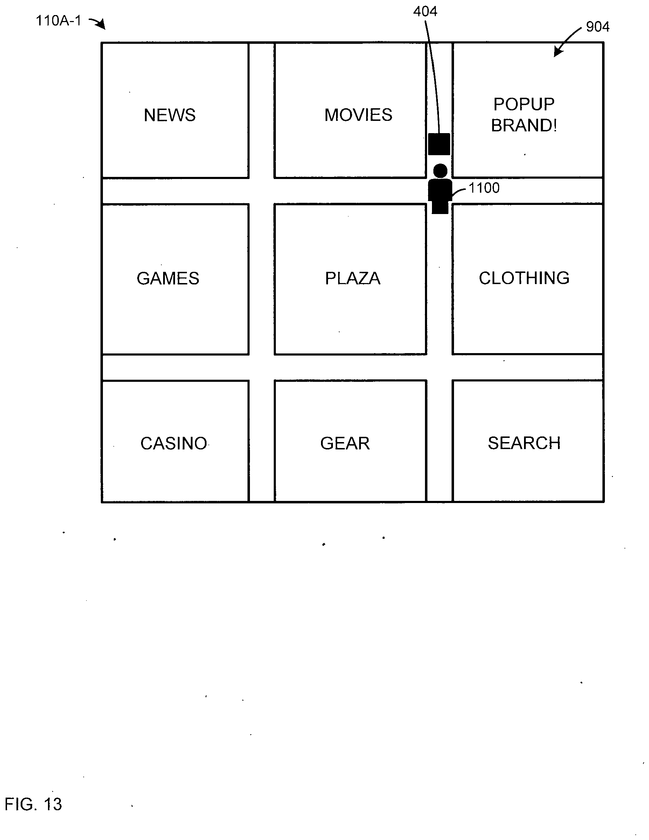

In these examples, for at least the avatar 1100 (e.g. for the client device 108-1 being used to control the avatar 1100), the updated electronic map 110A-1 may be provided. For example, as depicted in FIG. 13, the identifier 904 of the interactive environment 116-1 is provided at the updated electronic map 110A-1, which may be provided to, and/or accessed by, the client device 108-1 in place of the electronic map 110- . 1. At the updated electronic map 110A-1 in FIG. 13, the location of the avatar 1100 is also depicted as being adjacent to the region corresponding to the virtual geographic whitespace 402.

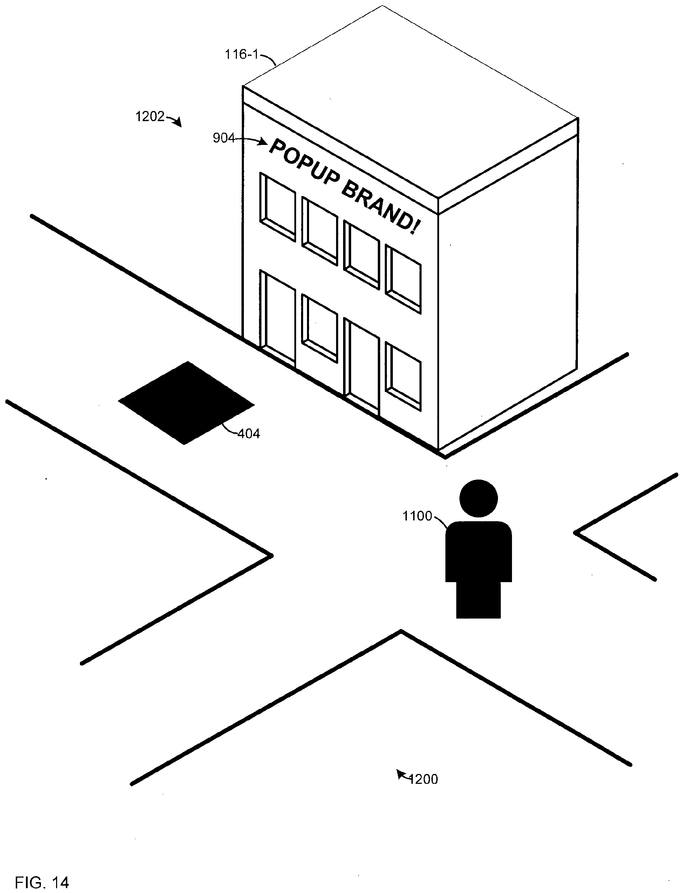

Attention is next directed to FIG. 14, which depicts the portion of the environment 1200 provided by the publishing platform 104-1 with the avatar 1100 at the same position depicted on the electronic map 110A-1 of FIG. 12. As depicted, the region 1202 that corresponds to the virtual geographic whitespace 402 has been adapted to include the interactive environment 116-1. As depicted, the interactive environment 116-1 is in a form of a building with the identifier 904 at the building. It is understood that the avatar 1100 may enter the building and interact with components thereof, for example to purchase goods and/or services as described herein. Hence, it is understood that the interactive environment 116-1 represents secondary content, as provided herein.

It is furthermore understood that the selection of the interactive environment 116-1 is to generally maximize a likelihood of diverting traffic from the client device 108-1 to the target platform 106-1.

With reference again to FIG. 11, it is furthermore understood that the selection of the interactive environment 116-1 may further be based on the virtual geographic whitespace 402 being located in a region of the electronic map 110-1 (e.g. a region of the environment defined by the electronic map 110A-1). For example, as the region of the virtual geographic whitespace 402 may be in a "CLOTHING" region the interactive environment 116-1 may be associated with clothing.

It is further understood that the link 404 is depicted in each of FIG. 12 and FIG. 14 and the avatar 1a00 may use the link 404 to navigate to and from an other environment, as described herein. Furthermore, when the avatar 1100 approaches the corresponding link in the other environment, such that the avatar 1100 may appear in the region 1202 at the location of the link 404, the engine 102 may determine that the avatar 1100 is associated with the virtual geographic whitespace 402 and implement the example represented by FIG. 4 to FIG. 10, and FIG. 13 to FIG. 14 accordingly.

It is further understood that the provided example may be adapted in various other ways.

For example, with reference to FIG. 6, the results 608 may identify only one target platform 106, and the bidding process of FIG. 7, FIG. 8 and FIG. 9 may be omitted. Indeed, in some examples, the engine 102 may be configured to select only one target platform 106 so that the bidding process is always omitted. In such examples, the engine 102 may be configured to select the target platform 106 whose characteristics have a best match with characteristics associated with the account profile 114.

In yet further examples, the engine 102 may be enabled to select an interactive environment 116, of a plurality of interactive environments 116, based on the bidding process and not an account profile 114. For example, rather than implement the method 300, the engine 102 may implement a method comprising: allocating, in the memory 204, a virtual geographic whitespace within an electronic map 110 of a metaverse publisher platform 104; selecting an interactive environment, of a plurality of interactive environments, based on communications between a plurality of target platforms 106 and a mediator engine (e.g. the engine 102); and control the metaverse publisher platform to generate the interactive environment within the virtual geographic whitespace for an avatar associated while the avatar is associated with the virtual geographic whitespace.

As should by now be apparent, the operations and functions of the devices described herein are sufficiently complex as to require their implementation on a computer system, and cannot be performed, as a practical matter, in the human mind. In particular, computing devices, and the like, such as set forth herein are understood as requiring and providing speed and accuracy and complexity management that are not obtainable by human mental steps, in addition to the inherently digital nature of such operations (e.g., a human mind cannot interface directly with a metaverse environment, control the metaverse environment to provide interactive environments, amongst other features and functions set forth herein).

In this specification, elements may be described as "configured to" perform one or more functions or "configured for" such functions. In general, an element that is configured to perform or configured for performing a function is enabled to perform the function, or is suitable for performing the function, or is adapted to perform the function, or is operable to perform the function, or is otherwise capable of performing the function.

It is further understood that instance of the term "configured to", such as "a computing device configured to...", "a processor configured to...", "a controller configured to...", and the like, may be understood to include a feature of a computer-readable storage medium having stored thereon program instructions that, when executed by a computing device and/or a processor and/or a controller, and the like, may cause the computing device and/or the processor and/or the controller to perform a set of operations which may comprise the features that the computing device and/or the processor and/or the controller, and the like, are configured to implement. Hence, the term "configured to" is understood not to be unduly limiting to means plus function interpretations, and the like.

It is understood that for the purpose of this specification, language of "at least one of X, Y, and Z" and "one or more of X, Y and Z" may be construed as X only, Y only, Z only, or any combination of two or more items X, Y, and Z (e.g., XYZ, XY, YZ, XZ, and the like). Similar logic may be applied for two or more items in any occurrence of "at least one..." and "one or more..." language.

Unless the context of usage unambiguously indicates otherwise, articles "a," "an," and "the" should not be interpreted as meaning "one" or "only one." Rather such articles should be interpreted as meaning "at least one" or "one or more." Similarly, when the terms "the" or "said" are used to refer to a noun previously introduced by the indefinite article "a" or "an," "the" and "said" mean "at least one" or "one or more" unless the usage unambiguously indicates otherwise.

The terms "about", "substantially", "essentially", "approximately", and the like, are defined as being "close to", for example as understood by persons of skill in the art. In some examples, the terms are understood to be "within 10%," in other examples, "within 5%", in yet further examples, "within 1%", in yet further examples "within 0.5%", and in yet further examples "within 0.1%".

Persons skilled in the art will appreciate that in some examples, the functionality of devices and/or methods and/or processes described herein may be implemented using pre-programmed hardware or firmware elements (e.g., application specific integrated circuits (ASICs), electrically erasable programmable read-only memories (EEPROMs), etc.), or other related components. In other examples, the functionality of the devices and/or methods and/or processes described herein may be achieved using a computing apparatus that has access to a code memory (not shown), which stores computer-readable program code for operation of the computing apparatus. The computer-readable program code could be stored on a computer readable storage medium, which is fixed, tangible and readable directly by these components, (e.g., removable diskette, CD-ROM, ROM, fixed disk, USB drive). Furthermore, it is appreciated that the computer-readable program may be stored as a computer program product comprising a computer usable medium. Further, a persistent storage device may comprise the computer readable program code. It is yet further appreciated that the computer-readable program code and/or computer usable medium may comprise a non-transitory computer-readable program code and/or non-transitory computer usable medium. Alternatively, the computer-readable program code could be stored remotely but transmittable to these components via a modem or other interface device connected to a network (including, without limitation, the Internet) over a transmission medium. The transmission medium may be either a non-mobile medium (e.g., optical and/or digital and/or analog communications lines) or a mobile medium (e.g., microwave, infrared, free-space optical or other transmission schemes) or a combination thereof.

Persons skilled in the art will appreciate that there are yet more alternative examples and modifications possible, and that the above examples are only illustrations of one or more examples. The scope, therefore, is only to be limited by the claims appended hereto.

## Claims

1. A method comprising:
allocating, via a computing device, in a memory, a virtual geographic whitespace within an electronic map of a metaverse publisher platform;
receiving, via the computing device, in the memory, an account profile associated with a client device accessing the electronic map in association with the virtual geographic whitespace;
selecting, via the computing device, an interactive environment, of a plurality of interactive environments, based on the account profile; and
controlling, via the computing device, the metaverse publisher platform to generate the interactive environment within the virtual geographic whitespace for an avatar associated with the account profile while the avatar is associated with the virtual geographic whitespace.

2. The method of claim 1, further comprising:
deleting the interactive environment from the virtual geographic whitespace when the avatar is no longer associated with the virtual geographic whitespace.

3. The method of claim 1, further comprising:
determining that the avatar is associated with the virtual geographic whitespace in response to the avatar being one or more of:
proximal to the virtual geographic whitespace within the electronic map; and
within a given virtual distance of the virtual geographic whitespace within the electronic map.

4. The method of claim 1, further comprising:
determining that the avatar is associated with the virtual geographic whitespace in response to the avatar approaching a link, within the electronic map, or another electronic map, the link to a location that is one or more of:
proximal to the virtual geographic whitespace within the electronic map; and
within a given virtual distance of the virtual geographic whitespace within the electronic map.

5. The method of claim 1, wherein the plurality of interactive environments are associated with a plurality of respective target platforms.

6. The method of claim 1, further comprising:
generating the interactive environment within the virtual geographic whitespace for at least one additional avatar associated with an additional account profile while the at least one additional avatar is associated with the virtual geographic whitespace.

7. The method of claim 1, further comprising:
transferring a data record associated with the interactive environment to the account profile while the avatar is accessing the interactive environment.

8. The method of claim 7, wherein the data record comprises an electronic asset exchanged for an electronic currency.

9. The method of claim 1, further comprising:
controlling the metaverse publisher platform to regenerate the interactive environment within the virtual geographic whitespace for the avatar during a subsequent access of the metaverse publisher platform.

10. The method of claim 1, further comprising:
controlling a different metaverse publisher platform to generate another interactive environment within another virtual geographic whitespace for the avatar when an access of the different metaverse publisher platform occurs in association with the account profile.

11. The method of claim 1, further comprising:
selecting the interactive environment, of the plurality of interactive environments, further based on: communications between a plurality of target platforms and a mediator engine.

12. The method of claim 1, further comprising:
selecting the interactive environment, of the plurality of interactive environments, further based on: a region within the electronic map in which the virtual geographic whitespace is located.

13. A computing resource optimization engine comprising:
a controller; and
a computer-readable storage medium having stored thereon program instructions that, when executed by the controller, causes the controller to perform a set of operations comprising the method of any one of claims 1 to 12.

14. A non-transitory computer-readable storage medium having stored thereon program instructions that, when executed by a computing device, causes the computing device to perform a set of operations comprising the method of any one of claims 1 to 12.
